# EUROPEAN PATENT SPECIFICATION

(11) **EP 4 441 161 B1**
(45) Date of publication and mention of the grant of the patent: **14.10.2026**
(21) Application number: 22823379.7
(22) Date of filing: 29.11.2022
(51) Int. Cl.: C09J 123/14, C08L 23/14, C08L 51/06

(54) **HOT MELT ADHESIVE COMPOSITION**
SCHMELZKLEBERZUSAMMENSETZUNG
COMPOSITION ADHÉSIVE THERMOFUSIBLE

(30) Priority: 30.11.2021 EP 21306662
(43) Date of publication of application: 09.10.2024
(73) Proprietor: Bostik SA, 92800 Puteaux (FR)
(72) Inventor: LI, Danfeng, Shanghai 201108 (CN); YE, Xin, Shanghai 201108 (CN); SHI, Jianping, Shanghai 201108 (CN)
(74) Representative: Arkema Patent
(86) International application number: PCT/EP2022/083649
(87) International publication number: WO 2023/099461

(56) References cited:
- EP-A1- 3 159 387
- EP-A1- 3 234 056
- US-A1- 2015 087 760

## Description

### TECHNICAL FIELD

The present invention relates to a hot melt adhesive composition and its use for adhering nonwoven materials.

### TECHNICAL BACKGOUND

Hot melt adhesives (HM adhesives) are substances which are solid at room temperature and which often comprise neither water nor solvent. They are applied in the molten state after heating to a temperature generally of between 100 and 250°C, most often between 130 and 180°C, and solidify during cooling, thus forming a seal (or adhesive joint) which ensures the attachment of the two substrates to be assembled. Hot melt adhesives are generally provided in the form of compositions which comprise a thermoplastic polymer and optionally a tackifying resin and a plasticizer.

Hot melt adhesives are widely used in various applications, such as packaging, bookbinding and woodworking, as they have good stability and do not require the use of solvents. Such adhesives can also be used in nonwoven applications. For example, disposable nonwoven absorbent articles are widely used for infant, young child, incontinent adult and feminine care applications. For example, EP3234056A1 describes hot melt adhesive compositions for nonwoven substrates.

Typical disposable nonwoven absorbent articles include disposable diapers, training pants, adult incontinent pads and briefs, feminine sanitary napkins or pads, surgical masks. These items aim at receiving and containing body fluids and are usually worn against or in close proximity to the skin.

To manufacture disposable nonwoven absorbent articles, hot melt adhesive compositions are generally used to bond together various substrates of said articles, as they provide rapid bonding compared to other adhesives such as water-based or solvent-based adhesive compositions, which require a drying step of the water or solvent.

When hot melt adhesives are used in the field of sanitary materials, they often come into contact with moisture, such as body fluids, due to the nature of application thereof. It is well known that in some hot melt adhesives, the adhesiveness is low in a wet state. Where such hot melt adhesives are used in the field where the probability of contact with moisture is high, the adhesion between the substrates involved cannot be maintained, and the products themselves can collapse. For this reason, it is desirable that the adhesiveness of hot melt adhesive be maintained in a wet state thereof (wet adhesion). By *"wet adhesion"* is meant the ability to strongly affix to a substrate material in the presence of moist environmental conditions. In order to increase the wet adhesion of a hot melt composition, acid-modified waxes can be added. However, such compounds tend to generate an unpleasant odor and a darker color of the adhesive which can result in a lower quality product.

There is still a need for a hot melt adhesive composition which provides good adhesion, notably a high wet bonding strength in particular in nonwoven material-based products, and even more particular in hydrophilic nonwoven material-based products.

### DESCRIPTION OF THE INVENTION

### A. Hot melt adhesive composition

The present invention concerns a hot melt adhesive composition comprising:
i) from 5% to 30% by weight of a first metallocene-catalyzed propylene-based copolymer;
ii) from 2% to 40% by weight of a second metallocene-catalyzed propylene-based copolymer ;
iii) from 2% to 35% by weight of a polyolefin copolymer selected from the group consisting of:
   iii-1) acid-grafted polyolefin copolymer;
   iii-2) a copolymer based on olefins and unsaturated monomers containing acid groups or anhydride groups; and
   iii-3) mixtures thereof;
iv) from 25% to 65% by weight of a tackifier;
v) optionally a third metallocene-catalyzed propylene-based copolymer;
wherein each of the metallocene-catalyzed propylene-based copolymers i) and ii) comprises, independently of each other, from 1% to 20% by weight of ethylene units; and wherein the acid-grafted polyolefin copolymer iii-1) has a viscosity higher or equal to 2000 mPas at 190°C.

As used herein, by "propylene-based copolymer" is meant a copolymer comprising more than 50% by weight of propylene monomer units relative to the weight of the copolymer.

As used herein, by "acid-grafted polyolefin copolymer" is meant a polyolefin copolymer grafted by carboxylic acid, carboxylic acid anhydride, carboxylic acid ester or mixtures thereof.

As used herein, the term "copolymer" refers to polymer formed by the polymerization of at least two different monomers. It includes both copolymer (two different monomers) and terpolymers (more than two different monomers).

As used herein, the term "metallocene-catalyzed copolymer" means a copolymer obtained though the polymerization of monomers in presence of metallocene catalytic system. Metallocene catalytic system are well known. It can typically comprise transition metal center, and one or two ligands coordinated with said metal center. Example of such system are disclosed in US 9,998,469.

The hot melt adhesive composition is such that it comprises at least four different components i), ii), iii), iv), and even at least five different components in case it contains optional component v).

The copolymers i), ii) and v) herein are not acid-modified copolymers, and preferably they are not functionalized.

In the present invention, by "acid-modified copolymer" is meant a copolymer chemically modified by carboxylic acid, carboxylic acid anhydride, carboxylic acid ester or mixtures thereof. An acid-modified copolymer may be for example a copolymer grafted by carboxylic acid, carboxylic acid anhydride, carboxylic acid ester or mixtures thereof.

According to the present invention, the metallocene-catalyzed propylene-based copolymers i), ii) and v) are not waxes, and in particular are not polyolefin waxes. The same applies to the polyolefin copolymer iii).

### First metallocene-catalyzed propylene-based copolymer i)

The first metallocene-catalyzed propylene-based copolymer i) may comprise more than 60% by weight, preferably more than 70% by weight, even more preferably more than 80% by weight, and advantageously more than 85 % by weight of propylene units relative to the weight of said copolymer.

The first metallocene-catalyzed propylene-based copolymer i) comprises from 1% to 20% by weight of ethylene units, preferably from 1% to 15% by weight, even more preferably from 2% to 10% by weight relative to the weight of said copolymer.

The first metallocene-catalyzed propylene-based copolymer i) may comprise olefin co-monomers further to propylene and ethylene. The olefin co-monomers may be selected from 1- butene, 1-pentene, 3-methyl-1-butene, 3-methyl-1-pentene, 1-hexene, 1-dodecene, 1-octene, 1-decene, and mixtures thereof.

In a preferred embodiment, the first metallocene-catalyzed propylene-based copolymer i) comprises only propylene and ethylene units.

The first metallocene-catalyzed propylene-based copolymer i) may have a melting point from 30°C to 120°C, preferably from 50°C to 110°C, and even more preferably from 80°C to 100°C. The melting point can be measured using Differential Scanning Calorimetry (DSC).

The first metallocene-catalyzed propylene-based copolymer i) may have a glass transition temperature from -75°C to -10°C, preferably from -50°C to -15°C, and even more preferably from -35°C to -20°C. The glass transition temperature can be measured using differential scanning calorimetry (DSC) according to standard ASTM D 3418-82.

The first metallocene-catalyzed propylene-based copolymer i) may have a density of from 0.800 to 0.900 g/cm³, preferably from 0.850 to 0.890 g/cm³, and even more preferably from 0.860 to 0.880 g/cm³. The density is measured according to the standard ASTM D-792-00.

The viscosity at 190°C of the first metallocene-catalyzed propylene-based copolymer i) may range from 700 mPas to 10 000 mPas, preferably from 1 000 to 10 000 mPas, and even more preferably from 2 000 to 9 000 mPas. The viscosity may be measured according to ASTM D3236.

The first metallocene-catalyzed propylene-based copolymer may have a weight average molecular weight (Mw) ranging from 10 000 g/mol to 80 000 g/mol, preferably from 10 000 g/mol to 50 000 g/mol, and even more preferably from 15 000 g/mol to 40 000 g/mol.

The weight average molecular weight (Mw) can be measured by gel permeation chromatography (GPC).

The first metallocene-catalyzed propylene-based copolymer i) may have an enthalpy of melting above 20 J/g, preferably above 30 J/g, and even more preferably above 35 J/g as determined by DSC.

The terms "enthalpy of melting", "enthalpy of fusion", "heat of fusion" and "heat of melting" are used interchangeably.

The hot melt adhesive composition comprise from from 5% to 30% by weight, even more preferably from 8% to 20% by weight, of copolymer i) as defined above, based on the total weight of the hot melt adhesive composition.

Examples of first copolymer i) useful in the present invention may be available from ExxonMobil Chemical Co. under the trade name VistamaXX (such as for example Vistamaxx^{®}8880).

### Second metallocene-catalyzed propylene-based copolymer ii)

The second metallocene-catalyzed propylene-based copolymer is different from copolymer i) as defined above.

The second metallocene-catalyzed propylene-based copolymer ii) may comprise more than 60% by weight, preferably more than 70% by weight, even more preferably more than 80% by weight, and advantageously more than 85 % by weight of propylene units relative to the weight of said copolymer.

The second metallocene-catalyzed propylene-based copolymer ii) comprises from 1% to 20% by weight of ethylene units, preferably from 5% to 15% by weight, even more preferably from 8% to 15% relative to the weight of said copolymer.

The second metallocene-catalyzed propylene-based copolymer ii) may comprise olefin co-monomers further to propylene and ethylene. The olefin co-monomers may be selected from 1- butene, 1-pentene, 3-methyl-1-butene, 3-methyl-1-pentene, 1-hexene, 1-dodecene, 1-octene, 1-decene, and mixtures thereof.

In a preferred embodiment, the second metallocene-catalyzed propylene-based copolymer ii) comprises only propylene and ethylene units.

The second metallocene-catalyzed propylene-based copolymer ii) may have a melting point from 30°C to 120°C, preferably from 50°C to 110°C, and even more preferably from 80°C to 100°C. The melting point may be measured using Differential Scanning Calorimetry (DSC).

The second metallocene-catalyzed propylene-based copolymer ii) may have a glass transition temperature from -75°C to -10°C, preferably from -50°C to -15°C, and even more preferably from -35°C to -20°C. The glass transition temperature can be measured using differential scanning calorimetry (DSC) according to standard ASTM D 3418-82.

The second metallocene-catalyzed propylene-based copolymer ii) may have a density of from 0.800 to 0.900 g/cm³, preferably from 0.850 to 0.890 g/cm³, and even more preferably from 0.860 to 0.880 g/cm³. The density is measured according to the standard ASTM D-792-00.

The viscosity at 190°C of the second metallocene-catalyzed propylene-based copolymer ii) may range from 700 mPas to 20 000 mPas, preferably from 800 to 10 000 mPas, and even more preferably from 1 000 to 9 000 mPas. The viscosity may be measured according to ASTM D3236.

The second metallocene-catalyzed propylene-based copolymer ii) may have an enthalpy of melting above 5 J/g, preferably from 5 J/g to 20 J/g, and more preferably from 5 J/g to 10 J/g as determined by DSC.

The second metallocene-catalyzed propylene-based copolymer ii) may have a weight average molecular weight (Mw) ranging from 10 000 g/mol to 80 000 g/mol, preferably from 10 000 g/mol to 50 000 g/mol, and even more preferably from 20 000 g/mol to 50 000 g/mol.

The hot melt adhesive composition comprises from 2% to 40% by weight, even more preferably from 2% to 35% by weight of copolymer ii) as defined above, based on the total weight of the hot melt adhesive composition.

Examples of second copolymer ii) useful in the present invention may be available from ExxonMobil Chemical Co. under the trade name VistamaXX (such as for example Vistamaxx^{®}8380).

### Polyolefin copolymer iii)

The hot melt adhesive composition comprises a polyolefin copolymer iii) selected from the group consisting of:
iii-1) acid-grafted polyolefin copolymer;
iii-2) a copolymer based on olefins and unsaturated monomers containing acid groups or anhydride groups; and
iii-3) mixtures thereof.

### Acid-grafted polyolefin copolymer iii-1)

In the present invention, by "acid-grafted copolymer" is meant a copolymer grafted by carboxylic acid, carboxylic acid anhydride, carboxylic acid ester or mixtures thereof. The grafting may be made by processes known to the skilled person, for example the grafting may be made by reactive extrusion. The grafting may be done in presence of a radical initiator such as organic peroxides, azo compounds, etc.

The acid-grafted polyolefin copolymer iii-1) is preferably a polymer of at least two alpha olefins.

The alpha olefin may be selected from the group consisting of ethylene, propylene, 1-butene, pentene, hexene, heptene, octene, nonene, decene, undecene, dodene, and mixtures thereof.

Preferably, the alpha olefin is selected from the group consisting of ethylene, propylene, 1-butene and mixtures thereof.

More preferably, the polyolefin is either a copolymer of ethylene and propylene, or a terpolymer of ethylene, propylene and 1-butene. Preferably, the copolymer of ethylene and propylene comprises more than 50% by weight of propylene units based on the total weight of said copolymer. Preferably, the terpolymer of ethylene, propylene and 1-butene is 1-butene rich. By "1-butene rich terpolymer" is meant a terpolymer whose predominant unit is 1-butene.

The carboxylic acid may be selected from dicarboxylic acids, for example selected from the group consisting of maleic acid, fumaric acid, succinic acid, phtalic acid, glutaric acid, itaconi acid, acrylic acid, methacrylic acid, and mixtures thereof. The carboxylic acid ester may derived from the esters of the above-mentioned carboxylic acid.

The carboxylic anhydride may be selected from the group consisting of maleic anhydride, succinic anhydride, phtalic anhydride, glutaric anhydride, and mixtures thereof.

Preferably, the acid-grafted polyolefin copolymer iii-1) is a maleic anhydride-grafted polyolefin copolymer.

The content of acid function in the acid-grafted polyolefin copolymer iii-1) may range from 0.01% to 5% by weight, preferably from 0.1% to 2% by weight, and even more preferably from 0.5% to 1.5% by weight, based on the total weight of the acid-grafted polyolefin copolymer.

The acid-grafted polyolefin copolymer iii-1) may have a softening point from 50°C to 180°C, preferably from 80°C to 150°C, and even more preferably from 100°C to 140°C. The softening point can be measured according to ASTM E-28 standard.

The acid-grafted polyolefin copolymer iii-1) may have a density of from 0.85 to 0.90 g/cm³, preferably from 0.86 to 0.89 g/cm³, and even more preferably from 0.865 to 0.88 g/cm³. The density is measured according to the standard ASTM D-792-00.

The acid-grafted polyolefin copolymer iii-1) preferably has a density of from 0.86 to 0.89 g/cm³, and even more preferably from 0.865 to 0.88 g/cm³.

The acid-grafted polyolefin copolymer iii-1) may have a weight average molecular weight (Mw) ranging from 10 000 g/mol to 100 000 g/mol, preferably from 20 000 g/mol to 80 000 g/mol, and even more preferably from 30 000 g/mol to 70 000 g/mol.

The acid-grafted polyolefin copolymer iii-1) has preferably a weight average molecular weight (Mw) ranging from 20 000 g/mol to 80 000 g/mol, and even more preferably from 30 000 g/mol to 70 000 g/mol.

The acid-grafter polyolefin copolymer has preferably a viscosity higher or equal to 4 000 mPa.s, and even more preferably higher or equal to 6 000 mPas. The viscosity may be measured according to ASTM D3236.

The hot melt adhesive composition may comprise from 0,05% to 50% by weight, preferably from 1% to 40% by weight, even more preferably from 2% to 35% by weight of copolymer iii-1) based on the total weight of the hot melt adhesive composition.

Preferably, the acid-grafted polyolefin copolymer iii-1) is an APAO amorphous polyalpha olefin, with low crystallinity.

Preferably, the acid-grafted polyolefin copolymer iii-1) has a needle penetration higher or equal to 10 dmm, more preferably higher or equal to 13 dmm. The needle penetration is measured according to the DIN EN 1426.

As used herein, the term "dmm" means decimillimeters.

Examples of acid-grafted polyolefin copolymer iii-1) useful in the present invention may be available from Evonik under the trade name Vestoplast (such as for example Vestoplast^{®} 308), or available from EASTMAN under the trade name Eastoflex.

### Copolymer based on olefins and unsaturated monomers containing acid groups or anhydride groups iii-2)

The copolymer iii-2) results from the copolymerization of at least one olefin, one unsaturated monomer containing acid groups or anhydride groups, and optional additional monomer(s).

The olefin may be selected from the group consisting of ethylene, propylene, 1-butene, pentene, hexene, heptene, octene, nonene, decene, undecene, dodene, and mixtures thereof; preferably ethylene or propylene, and even more preferably ethylene.

The unsaturated monomers containing acid groups or anhydride groups may be selected from unsaturated monocarboxylic acids, unsaturated dicarboxylic acids, anhydrides of said acid, and mixtures thereof.

The unsaturated monocarboxylic acid may be (meth)acrylic acid, crotonic acid, itaconic acid, citraconic acid. The unsaturated dicarboxylic acids may be maleic acid, fumaric acid, semi-esters of maleic/fumaric acid with C1-C5 alkanols.

The unsaturated monomers containing acid groups or anhydride groups are preferably maleic acid or maleic anhydride, and even more preferably maleic anhydride.

The optional additional monomer may be selected from (meth)acrylic acid esters. The (meth)acrylic acid esters may be selected from esters with low-molecular-weight C1 to C8 alkanols, methyl(meth)acrylate, ethyl (meth)acrylate, propyl (meth)acrylate, butyl (meth)acrylate, or 2-ethylhexyl (meth)acrylate. Preferably, the (meth)acrylic acid ester is ethyl acrylate.

The copolymer iii-2) preferably comprises more than 50 % by weight of olefin units, more preferably more than 60% by weight, and even more preferably more than 70% by weight based on the total weight of said copolymer iii-2).

The copolymer iii-2) preferably comprise less than 10 % by weight, more preferably less than 5 % by weight of unsaturated monomer containing acid groups or anhydride groups based on the total weight of said copolymer iii-2).

Preferably, the copolymer iii-2) is an ethylene-ethyl acrylate-maleic anhydride copolymer.

Examples of copolymer iii-2) useful in the present invention may be available from Arkema under the trade name Lotader^{®} 8200 (ethylene - ethyl acrylate - maleic anhydride copolymer), Lotader^{®} 5500 and Lotader^{®}6600.

### Optional third metallocene-catalyzed propylene-based copolymer v)

The hot melt adhesive composition may comprise a third metallocene-catalyzed propylene-based copolymer v).

The third metallocene-catalyzed propylene-based copolymer v) is different from each copolymers i) and ii) as defined above.

The third metallocene-catalyzed propylene-based copolymer v) may comprise more than 60% by weight, preferably more than 70% by weight, even more preferably more than 80% by weight, and advantageously more than 85 % by weight of propylene units relative to the weight of the copolymer.

The third metallocene-catalyzed propylene-based copolymer v) may comprise from 1% to 20% by weight of ethylene units, preferably from 5% to 15% by weight, even more preferably from 8% to 15% relative to the weight of said copolymer.

The third metallocene-catalyzed propylene-based copolymer v) may comprise olefin co-monomers further to propylene and ethylene. The olefin co-monomers may be selected from 1- butene, 1-pentene, 3-methyl-1-butene, 3-methyl-1-pentene, 1-hexene, 1-dodecene, 1-octene, 1-decene, and mixtures thereof.

In a preferred embodiment, the third metallocene-catalyzed propylene-based copolymer v) comprises only propylene and ethylene units.

The third metallocene-catalyzed propylene-based copolymer v) may have a melting point from 30°C to 120°C, preferably from 50°C to 110°C, and even more preferably from 80°C to 100°C. The melting point may be measured using Differential Scanning Calorimetry (DSC).

The third metallocene-catalyzed propylene-based copolymer v) may have a density of from 0.800 to 0.900 g/cm³, preferably from 0.850 to 0.890 g/cm³, and even more preferably from 0.860 to 0.880 g/cm³. The density is measured according to the standard ASTM D-792-00.

The third metallocene-catalyzed propylene-based copolymer v) may have a melt flow rate ranging from 3 g/min to 100g/min, preferably from 8 g/min to 80 g/min, and more preferably from 10 g/min to 60 g/min. The melt flow rate is measured at 190°C/2.16 kg according to ASTM D1238.

The third metallocene-catalyzed propylene-based copolymer v) may have a weight average molecular weight (Mw) higher than 50 000 g/mol, preferably higher than 80 000 g/mol, and even more preferably from 100 000 g/mol to 200 000 g/mol.

The third metallocene-catalyzed propylene-based copolymer v) may have an enthalpy of melting above 5 J/g, preferably from 5 J/g to 20 J/g, and more preferably from 5 J/g to 10 J/g as determined by DSC.

The hot melt adhesive composition may comprise from 0% to 20% by weight, preferably from 0% to 10% by weight, even more preferably from 0% to 5% by weight of copolymer v) as defined above, based on the total weight of the hot melt adhesive composition.

Examples of second copolymer v) useful in the present invention may be available from ExxonMobil Chemical Co. under the trade name VistamaXX (such as for example Vistamaxx^{®}6502).

### Composition

The hot melt adhesive composition comprises a tackifying resin. The tackifying resin is preferably present in the hot melt adhesive composition at a content of from 25 to 60 % by weight, and even more preferably from 30 % to 50% by weight relative to the total weight of the hot melt adhesive composition.

The tackifying resins or tackifiers which are used in the hot melt adhesives of the present invention are those which are compatible with the polymers. As used herein, the term *"tackifying resin"* or *"tackifier"* include:
(a) Aliphatic and cycloaliphatic petroleum hydrocarbon resins having Ring and Ball softening points from 90°C to 160°C as determined by ASTM method E28-58T, the latter resins resulting from the polymerization of monomers consisting primarily of aliphatic and/or cycloaliphatic olefins and diolefins; also included are the hydrogenated aliphatic and cycloaliphatic petroleum hydrocarbon resins, examples of such commercially available resins based on a C5 olefin fraction of this type are Piccotac 95 tackifying resin sold by Hercules Corp. and Escorez 1310LC sold by ExxonMobil Chemical Company, or even C115W from Nanjing Yangzi Eastman Chemical;
(b) Aromatic petroleum hydrocarbon resins and the hydrogenated derivatives thereof;
(c) Aliphatic/aromatic petroleum derived hydrocarbon resins and the hydrogenated derivatives thereof;
(d) Aromatic modified cycloaliphatic resins and the hydrogenated derivatives thereof;
(e) Polyterpene resins having a softening point from 95°C to 140°C the latter polyterpene resins generally resulting from the polymerization of terpene hydrocarbons, such as the mono-terpene known as pinene, in the presence of Friedel-Crafts catalysts at moderately low temperatures; the hydrogenated polyterpene resins are also included;
(f) Copolymers and terpolymers of natural terpenes, e.g. styrene/terpene, α-methyl styrene/terpene and vinyl toluene/terpene;
(g) Natural and modified rosin such as, for example, gun rosin, wood rosin, tall-oil rosin, distilled rosin, hydrogenated rosin, dimerized rosin and polymerized rosin;
(h) Glycerol and pentaerythritol esters of natural and modified rosin, such as, for example, the glycerol ester of pale wood rosin, the glycerol ester of hydrogenated rosin, the glycerol ester of polymerized rosin, the pentaerythritol ester of pale wood rosin, the pentaerythritol ester of hydrogenated rosin, the pentaerythritol ester of tall-oil rosin, and the phenolic modified pentaerythritol ester of rosin;
(i) Phenolic-modified terpene resins such as for example, the resin product resulting from the condensation in an acidic medium of a terpene and a phenol;
(j) mixtures thereof.

The tackifying resin may have a Ring and Ball softening point (measured by ASTM E28) of at least 90°C and preferably from 100°C to 130°C.

Preferably, the tackifier is selected from the hydrogenated resins.

Preferably, the tackifier is selected from the group consisting of:
(a) Aliphatic and cycloaliphatic petroleum hydrocarbon resins having Ring and Ball softening points from 90°C to 160°C as determined by ASTM method E28-58T, the latter resins resulting from the polymerization of monomers consisting primarily of aliphatic and/or cycloaliphatic olefins and diolefins; also included are the hydrogenated aliphatic and cycloaliphatic petroleum hydrocarbon resins, examples of such commercially available resins based on a C5 olefin fraction of this type are Piccotac 95 tackifying resin sold by Hercules Corp. and Escorez 1310LC sold by ExxonMobil Chemical Company;
(b) Aromatic petroleum hydrocarbon resins and the hydrogenated derivatives thereof;
(c) Aliphatic/aromatic petroleum derived hydrocarbon resins and the hydrogenated derivatives thereof.

In a preferred embodiment, the tackifier is selected from the a) aliphatic and cycloaliphatic petroleum hydrocarbon resins having Ring and Ball softening points from 90°C to 160°C, and their hydrogenated derivatives.

In a preferred embodiment, the tackifier is not an acid-modified tackifier.

In a preferred embodiment, the hot melt adhesive composition does not comprise acid-modified tackifier.

By "acid-modified tackifier" is meant a tackifier modified by carboxylic acid, carboxylic acid anhydride, carboxylic acid ester, or mixtures thereof. Example of acid-modified tackifier is a tackifier modified by maleic acid or maleic anhydride.

The hot melt adhesive composition may comprise one or more additional components. Such additional components can be selected from the group consisting of plasticizer, wax, stabilizer, inert colorant, filler, surfactant, other types of polymers, crosslinking agent, nucleating agent, reactive compound, fire-retardant mineral or organic agent, ultraviolet (UV) or infrared (IR) light absorbing agent, UV or IR fluorescing agents, and mixtures thereof.

Typical fillers include talc, calcium carbonate, clay, silica, mica, wollastonite, feldspar, aluminum silicate, alumina, hydrated alumina, glass microspheres, ceramic microspheres, thermoplastic microspheres, baryte and wood flour.

A plasticizer is preferably present in the hot melt adhesive composition. More particularly, a solid or liquid plasticizer can be present in the composition of the present invention.

The plasticizer may be present in the hot melt adhesive composition at a content from 5 % to 25 % by weight, and preferably from 10 % to 23 % by weight relative to the weight of the hot melt adhesive composition.

A suitable plasticizer may be selected from naphthenic oil, a paraffinic oil, polyisobutylene, a benzoate ester, and mixtures thereof.

Naphthenic oils and paraffinic oils are petroleum based oils which consists in a mixture of naphthenic hydrocarbons (aliphatic, saturated or unsaturated, C4 to C7-member hydrocarbon 30 rings, and preferably aliphatic, saturated or unsaturated, C4 to C6-member rings. As way of example, mention may be made of cycloalkanes such as cyclopentane, cyclohexane, cycloheptane)), paraffinic hydrocarbons (saturated, linear or branched, alkanes) and aromatic hydrocarbons (aromatic hydrocarbon rings, which may be monocyclic or polycyclic, and preferably aromatic C6-member hydrocarbon rings).

The classification of Naphthenic and Paraffinic oil is made based on the amount of each type of hydrocarbons in the oil. Typically, paraffinic oils have a paraffinic hydrocarbons content of at least 50% by weight; naphthenic oils have a naphthenic hydrocarbons content between 30% and 40% by weight, relative to the total weight of the plasticizer.

Useful plasticizers are commercially available. By way of example, mention may be made of the naphtenic oils from NYNAS sold under the trade names NYFLEX^{®} 223 and NYFLEX^{®} 222B.

Other plasticizer(s) may be added in the hot melt adhesive composition according to the invention such as for example:
- a polyisobutylene, such as INDOPOL H300, a liquid polybutene available from INEOS oligomers with a molecular weight (Mn) of 1300 ;
- solid plasticizers such as a benzoate ester, such as 1,4-cyclohexane dimethanol dibenzoate (Softening point of 118 °C) available from EASTMAN CHEMICAL under the name BENZOFLEX 352.

The composition according to the present invention may include at least one stabilizer. The stabilizer may be present in the hot melt adhesive composition at a content from 0.1 to 5 % and preferably from 0.5 to 3 % by weight relative to the weight of the hot melt adhesive composition. The stabilizers which are useful in the hot melt adhesive composition of the present invention are incorporated to help protect the polymers noted above, and thereby the total adhesive system from the effects of thermal and oxidative degradation which normally occurs during the manufacture and application of the adhesive, as well as in the ordinary exposure of the final product to the ambient environment.

Among the applicable stabilizers are high molecular weight hindered phenols and multifunction phenols, such as sulfur and phosphorous-containing phenols. Hindered phenols are well known to those skilled in the art and may be characterized as phenolic compounds that also contain sterically bulky radicals in close proximity to the phenolic hydroxyl group thereof. In particular, tertiary butyl groups generally are substituted onto the benzene ring in at least one of the ortho positions relative to the phenolic hydroxyl group. The presence of these sterically bulky substituted radicals in the vicinity of the hydroxyl group serves to retard its stretching frequency and correspondingly, its reactivity; this steric hindrance thus providing the phenolic compound with its stabilizing properties. Representative hindered phenols include: 1,3,5-trimethyl-2,4,6-tris(3-5-di-tert-butyl-4-hydroxybenzyl) benzene; pentaerythritol tetrakis-3(3,5-di-tert-butyl-4-hydroxyphenyl) propionate; n-octadecyl-3(3,5-di-tert-butyl-4-hydroxyphenyl) propionate, 4.4'-methylenebis(4-methyl-6-tert-butylphenol); 2,6-di-tertbutylphenol; 6-(4-hydroxyphenoxy)-2,4-bis(n-octylthio)-1,3,5-triazine; 2,3,6-tris(4-hydroxy-3,5-di-tert-butyl-phenoxy)-1,3,5-triazine;di-n-octadecyl-3,5-di-tert-butyl-4-hydroxybenzylphosphonate; 2-(n-octyl-thio)ethyl-3,5-di-tert-butyl-4-hydroxybenzoate and sorbitol hexa-3(3,5-di-tert-butyl-4-hydroxy-phenyl)propionate.

The hot melt adhesive composition according to the present invention may further include at least one wax. The wax may be present in the hot melt adhesive composition at a content from 0% to 30 % and preferably from 0.5 to 3 % by weight relative to the weight of the composition.

The presence of the wax makes it possible to reduce the melt viscosity of the hot melt adhesive without appreciably decreasing its adhesive bonding characteristics. These waxes are also used to reduce the open time, or set-up time of the composition without affecting the temperature performance.

Among useful wax materials are:
(1) petroleum waxes such as paraffin wax having a melting point from 50°C to 80°C and microcrystalline wax having a melting point from 55°C to 100°C, the latter melting points being determined by ASTM method D127-60;
(2) synthetic waxes made by polymerizing carbon monoxide and hydrogen such as Fischer-Tropsch wax.

Preferably, the hot melt adhesive composition does not comprise an acid-modified wax, and even more preferably it does not comprise a wax.

In the present invention, by "acid-modified wax" is meant a wax modified by carboxylic acid, carboxylic acid anhydride, carboxylic acid ester or mixtures thereof. It can be for example, a wax modified by maleic acid or maleic anhydride. Example of acid-modified wax is acid-modified polyolefin wax.

According to a preferred embodiment, the composition of the present invention is free of an acid-modified component (except polyolefin copolymer iii) in particular acid-grafted polyolefin copolymer iii-1)). Such components may include for example an acid-modified wax, an acid-modified resin (for example a petroleum or a tackifier resin), an acid-modified softening agent, an acid-modified oil, an acid-modified plasticizer or an acid-modified rubber.

Preferably, the hot melt adhesive composition does not comprise propylene homopolymer.

The viscosity at 160°C of the hot melt adhesive composition may range from 500 to 10 000 mPas, preferably from 1 000 to 8 000 mPas, even more preferably from 2 000 to 6 000 mPas. The viscosity may be measured according to the ASTM D3236 standard and in a Brookfield RVT viscometer (spindle 27).

The softening point of the hot melt adhesive composition may range from 70 °C to 130°C, preferably from 80°C to 120°C. The softening point can be measured according to ASTM E-28 standard.

The hot melt adhesive composition of the present invention may be formulated by using any of the mixing technique known in the art.

For example, the hot melt adhesive may be prepared by mixing the ingredients at a temperature ranging from 150°C to 180°C under air atmosphere in a mixer consisting of a propeller powered by a motor, a heating mantle, a temperature control unit.

The hot melt adhesive composition comprises:
- from 5% to 30% by weight of copolymer i) as defined above;
- from 2% to 40% by weight of copolymer ii) as defined above;
- from 2% to 35% by weight of polyolefin iii), and more preferably copolymer iii-1) as defined above;
- from 25% to 65% by weight of a tackifier.

In a second embodiment, the hot melt adhesive composition may comprise:
- from 5% to 30% by weight of copolymer i) as defined above;
- from 2% to 30% by weight of copolymer ii) as defined above;
- from 2% to 35% by weight of polyolefin iii), and more preferably copolymer iii-1) as defined above;
- from 25% to 65% by weight of a tackifier;
- from 0.5% to 10% by weight of copolymer v).

### B. Uses

The present invention concerns the use of the hot melt adhesive composition as an adhesive for bonding two substrates together, or as a coating on the surface of a substrate.

The surface to be coated may comprise nonwoven fabric, tissue, absorbent fluff, super absorbent polymer (SAP), composite material, plastics which may be elastomeric or non-elastomeric, for example styrenic block copolymers (SBC), polyurethane, and polyolefin, and any mixture thereof.

Preferably, the surface is a nonwoven surface. More preferably, the surface comprises polypropylene (PP), polyethylene (PE), polyethylene terephthalate (PET), cotton, bamboo, silk and/or polylactic acid.

The present invention also concerns a process of manufacturing an assembly product (or laminate) comprising:
- a step (i) of heating the hot-melt adhesive composition according to the invention, e.g. at a temperature ranging from 120°C to 180°C, for at least a period of time long enough to render the hot melt adhesive composition liquid enough to be applied on a substrate (for example at least two hours), then
- a step (ii) of coating said composition on a first substrate, then
- a step (iii) of putting into contact the coated surface of the first substrate with the surface of a second substrate, so as to form an adhesive joint bonding the two substrates.

The substrates may be different or of same nature, with various forms (layer or film, strands, fluff).

Preferably, each substrate may be chosen independently from one another among nonwoven fabric, tissue, absorbent fluff, super absorbent polymer (SAP), composite material, plastics which may be elastomeric or non-elastomeric, and which may be chosen for example from styrenic block copolymers (SBC), polyurethane, and polyolefin, and any mixture thereof.

The composition according to the invention may be coated or applied with a variety of application techniques known in the art, which include contact type application (such as slot die coating) and non-contact type application (such as spraying or fiberization).

The present invention also relates to an article comprising at least one interior or exterior surface coated with the hot melt adhesive composition as described above.

Preferably, the interior or exterior surface of the article is a non woven fabric.

The article may be chosen from a disposable diaper, disposable training pants, a feminine sanitary napkin, an absorbent pad, or a surgical mask.

The present invention also concerns the use of the hot melt adhesive composition as define herein as a construction adhesive in disposable article.

The hot melt composition according to the invention advantageously leads to laminates with good adhesion, in particular both good dry and wet bonding strengths in nonwoven material-based products, and even more particular in hydrophilic nonwoven material-based products.

According to the present invention, by « comprised between x and y », or « ranging from x to y », it is meant a range wherein limits x and y are included. For example, the range "comprising between 1% and 3%" includes in particular 1% and 3%.

The following examples are given purely by way of illustration of the invention and should not, under any circumstances, be interpreted as limiting the scope thereof.

### EXPERIMENTAL PART

The following ingredients were used for the preparation of the hot melt adhesive compositions:- VESTOPLAST^{®} 308 (commercialized by EVONIK) : anhydride maleic-grafted 1-butene rich α-olefin copolymer with a density of 0.87 g/cm3, and a Mw of 49 000 g/mol;
- VISTAMAXX^{®} 8880 (commercialized by EXXONMOBIL) : metallocene-catalyzed copolymer primarily composed of isotactic propylene repeat units with 6 weight % of ethylene, having a density of 0.880 g/cm3, and a Mw of 27 000 g/mol;
- VISTAMAXX^{®} 8380 (commercialized by EXXONMOBIL) : metallocene-catalyzed copolymer primarily composed of isotactic propylene repeat units with 12 weight % of ethylene, having a density of 0.864 g/cm3, and a Mw of 43 000 g/mol;
- C115W (commercialized by Nanjing Yangzi Eastman Chemical Ltd : hydrogenated hydrocarbon resin;
- N4010 (commercialized by Sinopec Karamay) : Naphtenic oil;
- FB8925 (commercialized by Fine Blend Compatibilizer Jiangsu Co Ltd): maleic anhydride-grafted ethylene-propylene copolymer ;
- IRGANOX 1010 (commercialized by BASF) : Phenolic primary anti-oxydant: pentaerytritol tetrakis(3-(3,5-di-tert-butyl-4-hydroxyphenyl))propionate

The viscosity of the compositions was measured at 160°C in a Brookfield RVT viscometer (using n°27 spindle).

The softening point of the compositions was measured according to the ASTM E-28 standard.

### A1- Preparation of the hot melt adhesive compositions

The compositions of example 1 in Table 1 according to the invention are prepared by simple mixing of its ingredients. The ingredients were placed into a jacketed mixing kettle equipped with a heater and a stirrer, and then mixed while heating at 160°C for 120 min.

| | | Hot melt adhesive n°1 | Hot melt adhesive n°2 | Hot melt adhesive n°3 |
|---|---|---|---|---|
| N4010 | Plasticizer | 13 | 13 | 13 |
| C115W | Tackifying resin | 40 | 40 | 40 |
| Irganox 1010 | antioxidant | 0.5 | 0.5 | 0.5 |
| Vistamaxx^{®} 8380 | Copolymer ii) | 31 | 24 | 4 |
| Vistamaxx^{®} 6502 | Copolymer v) | - | 2 | 2 |
| Vistamaxx^{®} 8880 | Copolymer i) | 10.5 | 10.5 | 10.5 |
| FB8925 | Copolymer iii-1) | 5 | - | - |
| Vestoplast^{®} 308 | Copolymer iii-1) | - | 10 | 30 |
| Total (by weight) | | 100 | 100 | 100 |
| Viscosity at 160°C (mPas) | | 3520 | 2680 | 2786 |
| Softening point (°C) | | 88.8 | 87.7 | 85.1 |

### A2- Dry and wet peel strength

Laminated specimens were formed by using a laboratory coater, at 150 meter per minute.

The hot melt adhesive composition is first heated at a temperature of 155°C and is then applied to a nonwoven fabric (15 gsm hydrophilic spundbon nonwoven as first substrate) at 4 to 10 g/m² (depending of the substrate) by slot coating with different open times typically from 0.05 to 0.4 s, and nip rolls compression from 0.1 bar to 40 bar. The nonwoven fabric coated with the hot melt adhesive composition and air-through nonwoven, a polyethylene film or pure cotton were laid one upon another through the hot melt adhesive to obtain a laminate (NW/Air-through NW, NW/PE, or NW/Cotton).

The laminate is then stored at 25°C under an atmosphere of 50 % relative humidity for 24 hours to cool and solidify the hot melt adhesive. The laminate is then cut in order to obtain test specimens having a width of 25 mm and a length of 100 mm.

The T-peel test is performed by pulling apart the wet test specimen at a rate of 300 mm/min at 25°C, 50% RH and the dry peel strength is measured.

Or the test specimen is immersed in water at 25°C for 1 min in 0.9% salty solution and the wet test specimen is obtained by wiping off water. After that, the T-peel test is performed by pulling apart the wet test specimen at a rate of 300 mm/min at 25°C, 50% RH and the wet peel strength is measured.

| | | Hot melt adhesive n°1 | Hot melt adhesive n°2 | Hot melt adhesive n°3 |
|---|---|---|---|---|
| NW/air-through NW (add on 10 g/m2) | Dry peel (N/inch) | 4.45 | 5.15 | 5.6 |
| | Wet peel (N/inch) | 1.89 | 4.86 | 4.42 |
| NW/PE (add on 4.5 g/m²) | Dry peel (N/inch) | 3.68 | 3.8 | 3.9 |
| | Wet peel (N/inch) | SF | SF | SF |
| NW/cotton (add on 4 g/m²) | Dry peel (N/inch) | 5.4 | 6.3 | 6.1 |
| | Wet peel (N/inch) | 0.22 | 0.21 | 0.25 |

| | | | | |
|---|---|---|---|---|
| SF: substrate failure | | | | |

The composition of the present invention advantageously makes it possible to achieve both good dry and wet peel strength on different substrates.

## Claims

1. Hot melt adhesive composition comprising:
i) from 5% to 30% by weight of a first metallocene-catalyzed propylene-based copolymer;
ii) from 2% to 40% by weight of a second metallocene-catalyzed propylene-based copolymer ;
iii) from 2% to 35% by weight of a polyolefin copolymer selected from the group consisting of:
iii-1) acid-grafted polyolefin copolymer;
iii-2) a copolymer based on olefins and unsaturated monomers containing acid groups or anhydride groups; and
iii-3) mixtures thereof;
iv) from 25% to 65% by weight of a tackifier;
v) optionally a third metallocene-catalyzed propylene-based copolymer;
wherein each of the metallocene-catalyzed propylene-based copolymers i) and ii) comprises, independently of each other, from 1% to 20% by weight of ethylene units,
wherein the acid-grafted polyolefin copolymer iii-1) has a viscosity higher or equal to 2000 mPas at 190°C, the viscosity being measured as disclosed in the specification.

2. Hot melt adhesive composition according to claim 1, wherein the first metallocene-catalyzed propylene-based copolymer i) comprises more than 60% by weight, preferably more than 70% by weight, even more preferably more than 80% by weight, and advantageously more than 85 % by weight of propylene units relative to the weight of said copolymer.

3. Hot melt adhesive composition according to anyone of claim 1 or claim 2, wherein the first metallocene-catalyzed propylene-based copolymer i) has a glass transition temperature from -75°C to -10°C, preferably from -50°C to -15°C, and even more preferably from -35°C to -20°C, the glass transition temperature being measured as disclosed in the specification.

4. Hot melt adhesive composition according to anyone of claim 1 to 3, wherein the viscosity at 190°C of the first metallocene-catalyzed propylene-based copolymer i) ranges from 700 mPas to 10 000 mPas, preferably from 1 000 to 10 000 mPas, and even more preferably from 2 000 to 9 000 mPas, the viscosity being measured as disclosed in the specification.

5. Hot melt adhesive composition according to anyone of claim 1 to 4, wherein the first metallocene-catalyzed propylene-based copolymer i) has an enthalpy of melting above 20 J/g, preferably above 30 J/g, and even more preferably above 35 J/g as determined by DSC, the enthalpy of melting being measured as disclosed in the specification.

6. Hot melt adhesive composition according to anyone of claim 1 to 5, wherein the second metallocene-catalyzed propylene-based copolymer ii) comprises more than 60% by weight, preferably more than 70% by weight, even more preferably more than 80% by weight, and advantageously more than 85 % by weight of propylene units relative to the weight of said copolymer ii).

7. Hot melt adhesive composition according to anyone of claim 1 to 6, wherein the second metallocene-catalyzed propylene-based copolymer ii) has a glass transition temperature from -75°C to -10°C, preferably from -50°C to -15°C, and even more preferably from -35°C to -20°C, the glass transition temperature being measured as disclosed in the specification.

8. Hot melt adhesive composition according to anyone of claim 1 to 7, wherein the second metallocene-catalyzed propylene-based copolymer ii) has an enthalpy of melting from 5 J/g to 10 J/g, the enthalpy of melting being measured as disclosed in the specification.

9. Hot melt adhesive composition according to anyone of claim 1 to 8, wherein the acid-grafted polyolefin copolymer iii-1) has a density of from 0.86 to 0.89 g/cm³, preferably from 0.865 to 0.88 g/cm³.

10. Hot melt adhesive composition according to anyone of claim 1 to 9, wherein the acid-grafted polyolefin copolymer iii-1) has a weight average molecular weight (Mw) ranging from 20 000 g/mol to 80 000 g/mol, preferably from 30 000 g/mol to 70 000 g/mol, the Mw being measured as disclosed in the specification.

11. Hot melt adhesive composition according to anyone of claim 1 to 10, wherein the acid-grafted polyolefin copolymer iii-1) has a viscosity higher or equal to 4 000 mPa.s, and even more preferably higher or equal to 6 000 mPas.

12. Hot melt adhesive composition according to anyone of claim 1 to 11, wherein the acid-grafted polyolefin copolymer iii-1) is an acid-grafted copolymer of ethylene and propylene, or an acid-grafted terpolymer of ethylene, propylene and 1-butene.

13. Hot melt adhesive composition according to anyone of claim 1 to 12, wherein the acid-grafted polyolefin copolymer iii-1) is a maleic anhydride-grafted polyolefin copolymer.

14. Hot melt adhesive composition according to anyone of claim 1 to 13, wherein the copolymer iii-2) comprises more than 50 % by weight of olefin units, more preferably more than 60% by weight, and even more preferably more than 70% by weight based on the total weight of said copolymer iii-2);
and/or
the copolymer iii-2) comprises less than 10 % by weight, more preferably less than 5 % by weight of unsaturated monomer containing acid groups or anhydride groups based on the total weight of said copolymer iii-2).

15. Use of the hot melt adhesive composition according to anyone of claims 1 to 14, as an adhesive for bonding two substrates together, or as a coating on the surface of a substrate.

16. Process of manufacturing an assembly product (or laminate) comprising:
- a step (i) of heating the hot-melt adhesive composition according to anyone of claims 1 to 14 e.g. at a temperature ranging from 120°C to 180°C, for at least a period of time long enough to render the hot melt adhesive composition liquid enough to be applied on a substrate, then
- a step (ii) of coating said composition on a first substrate, then
- a step (iii) of putting into contact the coated surface of the first substrate with the surface of a second substrate, so as to form an adhesive joint bonding the two substrates.

## Patentansprüche

1. Schmelzklebstoffzusammensetzung, umfassend:
i) 5 bis 30 Gew.-% eines ersten metallocenkatalysierten Copolymers auf Propylenbasis;
ii) 2 bis 40 Gew.-% eines zweiten metallocenkatalysierten Copolymers auf Propylenbasis;
iii) 2 bis 35 Gew.-% eines Polyolefincopolymers, ausgewählt aus der Gruppe bestehend aus:
iii-1) säuregepfropftem Polyolefincopolymer;
iii-2) einem Copolymer auf Basis von Olefinen und ungesättigten Monomeren mit Säuregruppen oder Anhydridgruppen; und
iii-3) Mischungen davon;
iv) 25 bis 65 Gew.-% eines Klebrigmachers;
v) gegebenenfalls ein drittes metallocenkatalysiertes Copolymer auf Propylenbasis;
wobei jedes der metallocenkatalysierten Copolymere auf Propylenbasis i) und ii) unabhängig voneinander 1 bis 20 Gew.-% Ethyleneinheiten umfasst,
wobei das säuregepfropfte Polyolefincopolymer iii-1) eine Viskosität größer oder gleich 2000 mPas bei 190 °C aufweist, wobei die Viskosität wie in der Beschreibung offenbart gemessen wird.

2. Schmelzklebstoffzusammensetzung nach Anspruch 1, wobei das erste metallocenkatalysierte Copolymer auf Propylenbasis i) mehr als 60 Gew.-%, bevorzugt mehr als 70 Gew.-%, noch weiter bevorzugt mehr als 80 Gew.-% und vorteilhafterweise mehr als 85 Gew.-% Propyleneinheiten, bezogen auf das Gewicht des Copolymers, umfasst.

3. Schmelzklebstoffzusammensetzung nach einem der Ansprüche 1 oder 2, wobei das erste metallocenkatalysierte Copolymer auf Propylenbasis i) eine Glasübergangstemperatur von -75 °C bis -10 °C, bevorzugt von -50 °C bis -15 °C und noch weiter bevorzugt von -35 °C bis -20 °C aufweist, wobei die Glasübergangstemperatur wie in der Beschreibung offenbart gemessen wird.

4. Schmelzklebstoffzusammensetzung nach einem der Ansprüche 1 bis 3, wobei die Viskosität des ersten metallocenkatalysierten Copolymers auf Propylenbasis i) bei 190 °C im Bereich von 700 mPas bis 10.000 mPas, bevorzugt von 1000 bis 10.000 mPas und noch weiter bevorzugt von 2000 bis 9000 mPas liegt, wobei die Viskosität wie in der Beschreibung offenbart gemessen wird.

5. Schmelzklebstoffzusammensetzung nach einem der Ansprüche 1 bis 4, wobei das erste metallocenkatalysierte Copolymer auf Propylenbasis i) eine Schmelzenthalpie über 20 J/g, bevorzugt über 30 J/g und noch weiter bevorzugt über 35 J/g, wie durch DSC bestimmt, aufweist, wobei die Schmelzenthalpie wie in der Beschreibung offenbart gemessen wird.

6. Schmelzklebstoffzusammensetzung nach einem der Ansprüche 1 bis 5, wobei das zweite metallocenkatalysierte Copolymer auf Propylenbasis ii) mehr als 60 Gew.-%, bevorzugt mehr als 70 Gew.-%, noch weiter bevorzugt mehr als 80 Gew.-% und vorteilhafterweise mehr als 85 Gew.-% Propyleneinheiten, bezogen auf das Gewicht des Copolymers ii), umfasst.

7. Schmelzklebstoffzusammensetzung nach einem der Ansprüche 1 bis 6, wobei das zweite metallocenkatalysierte Copolymer auf Propylenbasis ii) eine Glasübergangstemperatur von -75 °C bis -10 °C, bevorzugt von -50 °C bis -15 °C und noch weiter bevorzugt von -35 °C bis -20 °C aufweist, wobei die Glasübergangstemperatur wie in der Beschreibung offenbart gemessen wird.

8. Schmelzklebstoffzusammensetzung nach einem der Ansprüche 1 bis 7, wobei das zweite metallocenkatalysierte Copolymer auf Propylenbasis ii) eine Schmelzenthalpie von 5 J/g bis 10 J/g aufweist, wobei die Schmelzenthalpie wie in der Beschreibung offenbart gemessen wird.

9. Schmelzklebstoffzusammensetzung nach einem der Ansprüche 1 bis 8, wobei das säuregepfropfte Polyolefincopolymer iii-1) eine Dichte von 0,86 bis 0,89 g/cm³, bevorzugt von 0,865 bis 0,88 g/cm³, aufweist.

10. Schmelzklebstoffzusammensetzung nach einem der Ansprüche 1 bis 9, wobei das säuregepfropfte Polyolefincopolymer iii-1) ein gewichtsmittleres Molekulargewicht (Mw) im Bereich von 20.000 g/mol bis 80.000 g/mol, bevorzugt von 30.000 g/mol bis 70.000 g/mol, aufweist, wobei das Mw wie in der Beschreibung offenbart gemessen wird.

11. Schmelzklebstoffzusammensetzung nach einem der Ansprüche 1 bis 10, wobei das säuregepfropfte Polyolefincopolymer iii-1) eine Viskosität größer oder gleich 4000 MPa.s und noch weiter bevorzugt größer oder gleich 6000 mPas aufweist.

12. Schmelzklebstoffzusammensetzung nach einem der Ansprüche 1 bis 11, wobei es sich bei dem säuregepfropften Polyolefincopolymer iii-1) um ein säuregepfropftes Copolymer von Ethylen und Propylen oder ein säuregepfropftes Terpolymer von Ethylen, Propylen und 1-Buten handelt.

13. Schmelzklebstoffzusammensetzung nach einem der Ansprüche 1 bis 12, wobei es sich bei dem säuregepfropften Polyolefincopolymer iii-1) um ein Maleinsäureanhydrid-gepfropftes Polyolefincopolymer handelt.

14. Schmelzklebstoffzusammensetzung nach einem der Ansprüche 1 bis 13, wobei das Copolymer iii-2) mehr als 50 Gew.-% Olefineinheiten, weiter bevorzugt mehr als 60 Gew.-% und noch weiter bevorzugt mehr als 70 Gew.-%, bezogen auf das Gesamtgewicht des Copolymers iii-2), umfasst;
und/oder
das Copolymer iii-2) weniger als 10 Gew.-%, weiter bevorzugt weniger als 5 Gew.-%, ungesättigtes Monomer mit Säuregruppen oder Anhydridgruppen, bezogen auf das Gesamtgewicht des Copolymers iii-2), umfasst.

15. Verwendung der Heißschmelzklebezusammensetzung nach einem der Ansprüche 1 bis 14 als Klebstoff zum Verbinden von zwei Substraten miteinander oder als Beschichtung auf der Oberfläche eines Substrats.

16. Verfahren zur Herstellung eines Montageprodukts (oder Laminats), umfassend:
- einen Schritt (i) des Erhitzens der Schmelzklebstoffzusammensetzung nach einem der Ansprüche 1 bis 14, z. B. auf eine Temperatur im Bereich von 120 °C bis 180 °C, mindestens über einen ausreichend langen Zeitraum, um die Schmelzklebstoffzusammensetzung flüssig genug zum Aufbringen auf ein Substrat zu machen, dann
- einen Schritt (ii) das Beschichtens eines ersten Substrats mit der Zusammensetzung, dann
- einen Schritt (iii) des Inkontaktbringens der beschichteten Oberfläche des ersten Substrats mit der Oberfläche eines zweiten Substrats, um so eine Klebefuge zu bilden, welche die beiden Substrate verbindet.

## Revendications

1. Composition adhésive thermofusible comprenant :
i) de 5 % à 30 % en poids d'un premier copolymère à base de propylène catalysé par métallocène ;
ii) de 2 % à 40 % en poids d'un deuxième copolymère à base de propylène catalysé par métallocène ;
iii) de 2 % à 35 % en poids d'un copolymère de polyoléfine choisi dans le groupe constitué par :
iii-1) copolymère de polyoléfine greffé avec un acide ;
iii-2) un copolymère à base d'oléfines et de monomères insaturés contenant des groupes acide ou des groupes anhydride ; et
iii-3) des mélanges correspondants ;
iv) de 25 % à 65 % en poids d'un agent tackifiant ;
v) éventuellement un troisième copolymère à base de propylène catalysé par métallocène ;
dans laquelle chacun des copolymères à base de propylène catalysés par métallocène i) et ii) comprend, indépendamment les uns des autres, de 1 % à 20 % en poids d'unités éthylène,
dans laquelle le copolymère de polyoléfine greffé avec un acide iii-1) a une viscosité supérieure ou égale à 2 000 mPas à 190 °C, la viscosité étant mesurée comme divulgué dans la description.

2. Composition adhésive thermofusible selon la revendication 1, dans laquelle le premier copolymère à base de propylène catalysé par métallocène i) comprend plus de 60 % en poids, de préférence plus de 70 % en poids, encore plus préférablement plus de 80 % en poids, et avantageusement plus de 85 % en poids d'unités propylène par rapport au poids dudit copolymère.

3. Composition adhésive thermofusible selon l'une quelconque de la revendication 1 ou de la revendication 2, dans laquelle le premier copolymère à base de propylène catalysé par métallocène i) a une température de transition vitreuse de -75 °C à -10 °C, de préférence de -50 °C à -15 °C, et encore plus préférablement de -35 °C à -20 °C, la température de transition vitreuse étant mesurée comme divulgué dans la description.

4. Composition adhésive thermofusible selon l'une quelconque des revendications 1 à 3, dans laquelle la viscosité à 190 °C du premier copolymère à base de propylène catalysé par métallocène i) est dans la plage de 700 mPas à 10 000 mPas, de préférence de 1 000 à 10 000 mPas, et encore plus préférablement de 2 000 à 9 000 mPas, la viscosité étant mesurée comme divulgué dans la description.

5. Composition adhésive thermofusible selon l'une quelconque des revendications 1 à 4, dans laquelle le premier copolymère à base de propylène catalysé par métallocène i) a une enthalpie de fusion supérieure à 20 J/g, de préférence supérieure à 30 J/g, et encore plus préférablement supérieure à 35 J/g comme déterminée par DSC, l'enthalpie de fusion étant mesurée comme divulgué dans la description.

6. Composition adhésive thermofusible selon l'une quelconque des revendications 1 à 5, dans laquelle le deuxième copolymère à base de propylène catalysé par métallocène ii) comprend plus de 60 % en poids, de préférence plus de 70 % en poids, encore plus préférablement plus de 80 % en poids, et avantageusement plus de 85 % en poids d'unités propylène par rapport au poids dudit copolymère ii).

7. Composition adhésive thermofusible selon l'une quelconque des revendications 1 à 6, dans laquelle le deuxième copolymère à base de propylène catalysé par métallocène ii) a une température de transition vitreuse de -75 °C à -10 °C, de préférence de -50 °C à -15 °C, et encore plus préférablement de -35 °C à -20 °C, la température de transition vitreuse étant mesurée comme divulgué dans la description.

8. Composition adhésive thermofusible selon l'une quelconque des revendications 1 à 7, dans laquelle le deuxième copolymère à base de propylène catalysé par métallocène ii) a une enthalpie de fusion de 5 J/g à 10 J/g, l'enthalpie de fusion étant mesurée comme divulgué dans la description.

9. Composition adhésive thermofusible selon l'une quelconque des revendications 1 à 8, dans laquelle le copolymère de polyoléfine greffé avec un acide iii-1) a une masse volumique de 0,86 à 0,89 g/cm³, de préférence de 0,865 à 0,88 g/cm³.

10. Composition adhésive thermofusible selon l'une quelconque des revendications 1 à 9, dans laquelle le copolymère de polyoléfine greffé avec un acide iii-1) a un poids moléculaire moyen en poids (Mw) allant de 20 000 g/mole à 80 000 g/mole, de préférence de 30 000 g/mole à 70 000 g/mole, le Mw étant mesuré comme divulgué dans la description.

11. Composition adhésive thermofusible selon l'une quelconque des revendications 1 à 10, dans laquelle le copolymère de polyoléfine greffé avec un acide iii-1) a une viscosité supérieure ou égale à 4 000 mPas, et encore plus préférablement supérieure ou égale à 6 000 mPas.

12. Composition adhésive thermofusible selon l'une quelconque des revendications 1 à 11, dans laquelle le copolymère de polyoléfine greffé avec un acide iii-1) est un copolymère d'éthylène et de propylène greffé avec un acide, ou un terpolymère d'éthylène, de propylène et de 1-butène greffé avec un acide.

13. Composition adhésive thermofusible selon l'une quelconque des revendications 1 à 12, dans laquelle le copolymère de polyoléfine greffé avec un acide iii-1) est un copolymère de polyoléfine greffé avec de l'anhydride maléique.

14. Composition adhésive thermofusible selon l'une quelconque des revendications 1 à 13, dans laquelle le copolymère iii-2) comprend plus de 50 % en poids d'unités d'oléfine, plus préférablement plus de 60 % en poids, et encore plus préférablement plus de 70 % en poids sur la base du poids total dudit copolymère iii-2) ;
et/ou
le copolymère iii-2) comprend moins de 10 % en poids, plus préférablement moins de 5 % en poids d'un monomère insaturé contenant des groupes acide ou des groupes anhydride sur la base du poids total dudit copolymère iii-2).

15. Utilisation de la composition adhésive thermofusible selon l'une quelconque des revendications 1 à 14, comme adhésif pour lier deux substrats ensemble, ou comme revêtement sur la surface d'un substrat.

16. Procédé de fabrication d'un produit d'assemblage (ou stratifié) comprenant :
- une étape (i) de chauffage de la composition adhésive thermofusible selon l'une quelconque des revendications 1 à 14, par exemple à une température allant de 120 °C à 180 °C, pendant au moins une durée suffisamment longue pour rendre la composition adhésive thermofusible suffisamment liquide pour être appliquée sur un substrat, puis
- une étape (ii) consistant à appliquer ladite composition en revêtement sur un premier substrat, puis
- une étape (iii) consistant à mettre en contact la surface revêtue du premier substrat avec la surface d'un deuxième substrat, de manière à former un joint adhésif liant les deux substrats.
